# EUROPÄISCHE PATENTSCHRIFT

(11) **EP 1 467 849 B1**
(45) Veröffentlichungstag und Bekanntmachung des Hinweises auf die Patenterteilung: **09.03.2011**
(21) Anmeldenummer: 03731649.4
(22) Anmeldetag: 22.01.2003
(51) Int. Cl.: B29C 45/16, B29C 45/14

(54) **VERFAHREN ZUR HERSTELLUNG EINES VERKLEBBAREN FORMTEILS SOWIE EIN NACH DIESEM VERFAHREN HERGESTELLTES FORMTEIL**
METHOD FOR PRODUCING AN ADHESIVE MOULDED BODY, AND A MOULDED BODY PRODUCED ACCORDING TO SAID METHOD
PROCEDE DE FABRICATION D'UN CORPS MOULE COLLABLE ET CORPS MOULE FABRIQUE SELON CE PROCEDE

(30) Priorität: 22.01.2002 CH 103022002
(43) Veröffentlichungstag der Anmeldung: 20.10.2004
(73) Patentinhaber: Weidmann Plastics Technology AG, 8640 Rapperswil (CH)
(72) Erfinder: AHLBORN, Norbert, CH-8006 Zürich (CH)
(74) Vertreter: Groner, Manfred
(86) Internationale Anmeldenummer: PCT/CH2003/000044
(87) Internationale Veröffentlichungsnummer: WO 2003/061941

(56) Entgegenhaltungen:
- EP-A- 0 767 040
- WO-A-95/21734
- GB-A- 622 456
- GB-A- 2 323 554
- DATABASE WPI Section Ch, Week 198701, Januar 1987 (1987-01) Derwent Publications Ltd., London, GB; Class A18, AN 1987-003793 [01] XP002237643 & JP 61 264055 A (KURARAY CO LTD), 21. November 1986 (1986-11-21)
- PATENT ABSTRACTS OF JAPAN vol. 006, no. 138 (M-145), 27. Juli 1982 (1982-07-27) & JP 57 059737 A (SEISAN NIPPONSHA KK), 10. April 1982 (1982-04-10)
- PATENT ABSTRACTS OF JAPAN vol. 013, no. 153 (M-813), 13. April 1989 (1989-04-13) & JP 63 312818 A (TOAGOSEI CHEM IND CO LTD), 21. Dezember 1988 (1988-12-21)

## Beschreibung

Die Erfindung betrifft ein Verfahren zur Herstellung eines verklebbaren Formteils gemäss Oberbegriff des Anspruchs 1. Solche Formteile, beispielsweise Bauteile im Kraftfahrzeugbau, werden hergestellt, in dem auf einen Grundkörper ein beidseitig haftendes Klebeband aufgeklebt wird. Die Aussenseite des auf den Grundkörper aufgebrachten Klebebandes ist mit einer abziehbaren Folie abgedeckt. Um das Teil beispielsweise an einem Gehäuse zu befestigen, wird die Folie abgezogen und das Teil mit der klebenden Aussenseite des Klebebandes an der vorgesehenen Stelle angedrückt.

Die Befestigung eines Teils mittels eines beidseitig haftenden Klebebandes hat gegenüber konventionellen Befestigungsmitteln, beispielsweise Befestigungsschrauben, wesentliche Vorteile, da eine schnelle Montage ohne zusätzliche Elemente erfolgen kann und wenig Platz beansprucht wird. Haftklebstoffe mit verbesserter Haftkraft sind bekannt und ermöglichen somit auch eine entsprechend gute Befestigung von Teilen mit entsprechenden Haftbändern. Bei glasgefüllten oder geschäumten Klebebändern höherer Dichte (meist 0,4-1 mm) sind dauerhafte Verklebungen von Materialien mit unterschiedlicher Wärmeausdehnung z.B. Alukunststoff möglich. Nachteilig ist jedoch, dass Haftklebstoffe mit hoher Viskosität und Haftfähigkeit schwer verarbeitbar sind. Die Herstellung eines Haftklebstoffes muss unter Schutzgas und/oder Sauerstoffabwesenheit erfolgen. So hergestellte Haftklebebänder mit hoher Haftkraft sind deshalb vergleichsweise teuer.

Der Stand der Technik auf dem Gebiet des Haftklebens wird z.B. in I. Benedek, L.J. Heyman, "Pressure Sensitive Adhesive Technology", Marcel Decker Inc., 1. Auflage 1997 wiedergegeben. Basispolymere, die als Vorprodukte der modernen Haftklebstoffe vorwiegend Polyacrylate, Natur- und Synthesekautschuke, Polyester, Polychloropren, Polyisobutene, Polyvinylether, Polyurethane und Polysiloxane sind, die versetzt mit Zusatzstoffen, wie beispielsweise Harzen, Weichmachern, Füllstoffen und Stabilisatoren, eingesetzt werden. Dazu kommt, dass das Aufbringen der Klebebänder aufwändig ist, da die Klebebänder ausgeschnitten oder ausgestanzt werden müssen. Nachteilig ist zudem, dass solche Klebebänder auf unebenen bzw. spärischen Flächen schwierig anzubringen sind.

Die gattungsbildende WO 95/21734 offenbart einen verklebbaren Formteil aus Kunststoff und ein Verfahren zur Herstellung dieses Formteils. Der verklebbare Formteil weist einen integrierten Klebeteil aus einem Schmelzkleber auf. Der Klebeteil wird in einem Spritzgusswerkzeug in einem separaten Schritt hergestellt. Der Formteil wird dann unter Bildung einer Fliessnaht an den Klebeteil angegossen. Der Klebeteil des so hergestellten verklebbaren Formteils ist bei Umgebungstemperatur hart und muss vor dem effektiven Klebvorgang, beispielsweise durch Wärmestrahlung erhitzt werden. Das erforderliche vorherige Erhitzen des Schmelzklebers vor dem effektiven Klebevorgang ist für viele Anwendungen umständlich oder nicht möglich.

Die EP 0 767 040 A betrifft ein Verfahren zum Verbinden mit einem festen Körper. Bei diesem Verfahren wird eine offene Kavität mit dem festen Körpers verschlossen und der Klebstoff an den Körper angespritzt. Die Kavität wird hierbei vollständig mit dem Klebstoff gefüllt. Der Klebstoff wird in ein nichtfliessendes Material umgewandelt und schliesslich wird es entformt. Das Verschliessen einer Kavität mit einem Teil aus Kunststoff ist schwierig und die bei Spritzgussverfahren üblicher Weise verwendeten hohen Drucke sind hier nicht möglich. Des weiteren kann aufgrund einer abdichtenden und stützenden Umrandung nicht die gesamte Fläche bis zum Rand mit Klebstoff versehen werden.

Die JP 57 059 737 A offenbart ein Verfahren und eine Vorrichtung zur Herstellung eines Kunststoffteils mit einer klebenden Schicht. In einem Extrusionswerkzeug wird der Kunststoffteil durch einen Schlitz extrudiert und gleichzeitig wird der klebende Stoff extrudiert und mit dem Kunststoffteil verbunden. Mit diesem Verfahren können lediglich Folien hergestellt werden.

Die JP 63 31 28 18 A offenbart ein Verfahren, bei dem ein Körper mit einer Klebstoffschicht aus einem Schmelzkleber versehen wird, dem Metallpulver beigemischt ist. Zum Verkleben des Körpers wird die Klebstoffschicht mittels Induktion erwärmt. Das Erhitzen einer Klebstoffschicht vor dem Kleben ist aufwändig oder in vielen Fällen nicht möglich.

Der Erfindung liegt die Aufgabe zugrunde, ein Verfahren der genannten Art zu schaffen, das die erwähnten Nachteile vermeidet und mit dem somit Teile der genannten Art kostengünstiger herstellbar und montierbar sind.

Die Erfindung ist bei einem gattungsgemässen Verfahren gemäss Kennzeichen des Anspruchs 1 gelöst. Grundkörper und klebende Körper bzw. das Vorprodukt können sequentiell im Formwerkzeug gespritzt werden. Das Formwerkzeug kann mit einer besonderen Beschichtung an der Kontaktseite zum Haftklebstoff bzw. zur Haftklebstoffvorstufe mit einer Beschichtung zur Haftungsreduzierung versehen sein. Auf die Verwendung von teuren Haftbändern kann beim erfindungsgemässen Verfahren verzichtet werden. Der klebende Körper bildet beim erfindungsgemässen Verfahren somit bereits von seiner Herstellung her ein Element des Teils. Dies ermöglicht auch die Herstellung von klebenden Bereichen, die uneben sind. Beispielsweise kann sich der klebende Bereich über eine Kante oder eine Ecke des Grundkörpers erstrecken. Es ist grundsätzlich auch möglich, die gesamte Aussenseite des Grundkörpers klebend auszubilden, wobei dessen Aussenform im wesentlichen beliebig sein kann. Die Oberfläche des Grundkörpers kann vor dem Anbringen des klebenden Körpers durch eine Oberflächenbehandlung (z.B. Beflammen, Coronabehandlung, Plasmabehandlung, etc.) ganz oder teilweise zur Haftverbesserung modifiziert werden. Dies kann z.B. in einem Spritzgiesswerkzeug bei einem kurzzeitigen Öffnen des Werkzeugs erfolgen.

Unter einem Haftklebstoff wird hier ein Klebstoff verstanden, der ohne Aktivierung bei Raumtemperatur lediglich durch Andrücken ausreichende Haftkräfte ergibt. Der angelsächsische Ausdruck "pressure sensitive adhesives" für solche Klebstoffe bringt dies klar zum Ausdruck. Ein Haftklebstoff ist dauerhaft klebrig und permanent klebefähig und unterscheidet sich beispielsweise von einem Festklebstoff, der durch physikalische oder chemische Reaktionen aushärtet.

Es wird das Spritzgiessverfahren verwendet. Damit können hochpräzise Formteile hergestellt werden. Die Dicke als auch der Bereich des klebenden Körpers können damit genau definiert werden. Es sind auch sehr dünne klebende Bereiche möglich. Zur Erzeugung sehr dünner Schichten sind auch Spritzgiesssonderverfahren wie z.B. das Spritzprägen einsetzbar. Zudem kann der klebende Bereich bei der Herstellung geschäumt und/oder im Werkzeug vernetzt werden. Es kann beispielsweise eine Nachvernetzung von Klebstoffvorprodukten oder die Entstehung eines Klebstoffes oder einer Klebstoffvorstufe durch Mischung und Vernetzung während der Verarbeitung erfolgen. Die Verarbeitung bezieht sich auf Verarbeitungsschritte des Spritzgiessens sowie vor- und nachgeschaltete Verarbeitungsschritte. Es entsteht in jedem Fall ein Haftklebstoff mit dauerklebrigen Eigenschaften. Die Haftklebstoffbasis ist vorzugsweise ein haftklebefähiges Vorprodukt. Die Haftklebstoffbasis kann ein reaktiv verdünntes System mit einem UV-Initiator und thermisch blockierten Radikalbildnern sein. Es sind aber auch Lösungsmittelsysteme und Hotmelthaftklebstoffe (PSA) möglich, welche ebenfalls weitere Vernetzungsmöglichkeiten enthalten können. Als Polymere (Vorstufen) eignen sich insbesondere Acrylate, an sich bekannte SIS/SBS/SEBS-Haftklebstoffe, Polyurethan-Haftklebstoffe und Silikon-Haftklebstoffe. Zusätzlich können die Klebstoffe oder Klebstoffvorprodukte beliebig funktionalisiert werden beispielsweise als Informationsträger wie z.B. mit Farben für eine Zuordnung oder Antistatika, Flammschutzmitteln etc.

Nach einer Weiterbildung der Erfindung wird der klebende Körper mit einer lösbaren Folie oder Schicht abgedeckt. Dies kann vorteilhaft dadurch erfolgen, dass eine solche Folie oder Schicht in ein Formwerkzeug eingelegt wird. Die Folie bzw. die Schicht wird dann zur Bildung des klebenden Körpers hinterspritzt. Die Folie bzw. die Schicht kann bereits vor dem Einlegen ins Werkzeug dreidimensional vorgeformt sein oder während der Verarbeitung verformt werden. Die Folie oder Schicht übernimmt hier die Funktion des Liners (Schutzfolie des Haftklebstoffs) und vermeidet hohe Haftung zwischen Werkzeugoberfläche und Haftklebstoff bzw. Haftklebstoffvorstufe.

Nach einer Weiterbildung der Erfindung wird der klebende Körper zunächst als Vorprodukt hergestellt. In einem weiteren Schritt wird das Vorprodukt so verändert, dass eine haftklebende Schicht entsteht. Dies kann beispielsweise durch Zuführen von Energie, beispielsweise mittels UV-, VIS-, IR, anders gekennzeichneter elektromagnetischer Strahlung oder Elektronenstrahlung erfolgen. Ebenfalls sind wärmeinitiierte oder chemische Prozesse möglich. Beispielsweise können damit die Klebeeigenschaften unmittelbar vor oder nach dem Montieren des Formteils verändert, insbesondere erhöht werden. Die Energieeinbringung kann auch induktiv geschehen. Hierzu muss der klebende Körper mit einem Metallpulver als Zuschlagstoff versehen werden. Vorzugsweise wird bei dieser Weiterbildung als Basispolymer ein SEBS eingesetzt. Der Tackifier wird durch ein Polymer, welches ebenfalls aus SEBS bestehen kann, gekapselt. Durch die erwähnte Energieleitung wird die Kapselung aufgehoben und die chemische Reaktion eingeleitet.

Nach einer Weiterbildung der Erfindung ist auch eine partielle Modifikation der Eigenschaften möglich. Es können beispielsweise mit einer Maskierung bei der Bestrahlung auch örtlich unterschiedliche Eigenschaften erzielt werden.

Die Herstellung ist dann besonders kostengünstig, wenn gemäss einer Weiterbildung der Erfindung das Formteil im Zweikomponentenspritzgussverfahren hergestellt wird. In den Formhohlraum wird mit einer ersten Düse der Grundkörper und mit einer zweiten Düse der klebende Körper eingespritzt. Grundsätzlich ist auch ein Mehrkomponentenspritzgiessen mit mehr als zwei Komponenten denkbar. Das Teil kann beispielsweise ausser einem klebenden Körper und einem Grundkörper einen dritten Körper aufweisen, der beispielsweise elastischer ist als der Grundkörper und beispielsweise eine Dichtfunktion ausübt. Vorgesehen ist auch eine Ausführung, bei welcher der klebende Körper gleichzeitig als Dichtmittel ausgebildet ist. Der zweite und der dritte Körper können jeweils auch Klebstoffmassen mit unterschiedlichen Eigenschaften (Tack, Festigkeit, etc.) sein. Als Mehrkomponentenspritzgiessverfahren sind grundsätzlich alle Sonderverfahren denkbar (Core-back, Indexplatten, Drehteller, Umsetzen, Verfahren).

Eine besonders geeignete Anwendung solcher Formteile ist die als Bauteil insbesondere im Kraftfahrzeugbau. Das Bauteil kann beispielsweise ein Teil der Aussen- oder Innenauskleidung, eine Einstiegsleiste oder eine Verkleidung des Motorraums sein. Der klebende Körper bzw. die klebenden Körper sind die Stellen, an denen dieses Bauteil befestigt wird. Ein solcher Körper eignet sich auch besonders zur Herstellung eines Gehäuses, das beispielsweise ein Gehäuse eines elektrischen Gerätes ist. Hier können die Funktionen Verbinden und Dichten durch eine angespritzte Klebstoffkomponente substituiert werden. Des weiteren sind auch andere Produkte z.B. im Sanitärbereich denkbar.

Nachfolgend wird die Erfindung anhand der Zeichnung näher erläutert. Es zeigen:
- Figur 1: schematisch eine räumliche Ansicht eines erfindungs- gemässen Teils,
- Figur 2: eine Ansicht eines weiteren erfindungsgemässen Teils,
- Figur 3: ein Schnitt entlang der Linie III-III der Figur 2 und
- Figur 4: schematisch ein Schnitt durch ein Werkzeug zur Her- stellung des erfindungsgemässen Verfahrens.

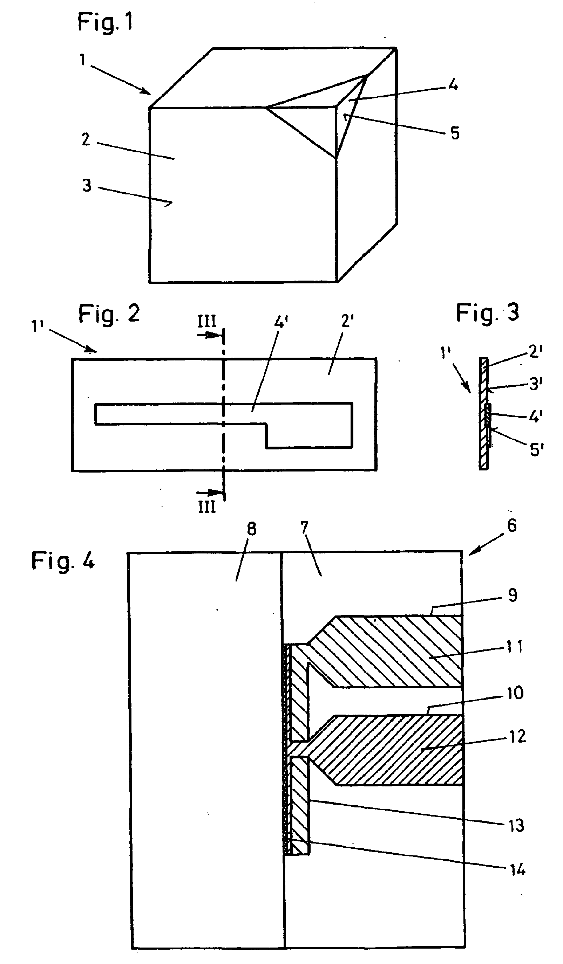

Die Figur 1 zeigt ein erfindungsgemässes verklebbares Formteil 1, das einen Grundkörper 2 mit einer Aussenseite 3 sowie einen klebenden Körper 4 mit einer klebenden Aussenseite 5 aufweist. Der Grundkörper 2 besteht vorzugsweise aus einem Kunststoff, beispielsweise einem thermoplastischen Kunststoff oder einem Metall und besitzt eine an sich beliebige Form. Der klebende Körper 4 ist direkt auf den Grundkörper 2 aufgebracht und bildet mit diesem eine Einheit. Der klebende Körper 4 ist ein Haftklebstoff oder ein Haftklebstoffvorprodukt zu einem Haftklebstoff, beispielsweise ein Haftklebstoff auf Acrylat-, SIS-, SBS-, SEBS-, Polyurethan- oder Silikonbasis, ein Schmelzhaftklebstoff oder Lösungsmittelhaftstoff oder Reaktivhaftklebstoff. Der klebende Körper 4 erstreckt sich beim Teil 1 gemäss Figur 1 über eine Ecke. Grundsätzlich kann dieser klebende Körper 4 aber auch an irgend einer anderen Stelle der Aussenseite 3 angeordnet sein. Er kann sich beispielsweise auch über eine Kante erstrecken oder flächig ausgebildet sein. Die Dicke des klebenden Körpers 4 kann unterschiedlich sein. Insbesondere kann dieser klebende Körper 4 sehr dünn sein. Der klebende Körper 4 ist jedoch kein Schmelzklebstoff, der bei Umgebungstemperaturen fest ist und zum Verkleben erhitzt werden muss.

Die Figuren 2 und 3 zeigen ein Formteil 1', das einen flächigen Grundkörper 2' sowie einen klebenden Körper 4' aufweist. Dieser klebende Körper 4' besitzt eine klebende Aussenfläche 5', die bezüglich einer Aussenseite 3' des Grundkörpers 2' bündig, erhaben oder vertieft sein kann. Die klebende Fläche 5' kann zudem mit einer hier nicht gezeigten Folie oder einer sonstigen lösbaren Schicht abgedeckt sein. Die Folie oder Schicht kann aus unterschiedlichen Werkstoffen hergestellt sein, beispielsweise aus Kunststoff, Papier oder Metall. Silikonisierte Kunststofffolien, auch Liner genannt, sind im Bereich der Haftklebebänder an sich bekannt. Der klebende Körper 4' kann ein noch nicht vernetzter Haftklebstoff sein. Das Vernetzen kann in einem späteren Prozess erfolgen, beispielsweise in an sich bekannter Weise durch UV-Strahlung, IR-Strahlung, VIS-Strahlung oder durch Erwärmen. Die Energie zur Vernetzungsreaktion oder zum Starten der Vernetzungsreaktion kann auch elektromagnetisch oder elektrisch eingebracht werden. Der klebende Körper 4' kann somit ein Vorprodukt sein, dessen Umwandlung, beispielsweise Vernetzung zur Veränderung der Klebeeigenschaften und der Viskosität in einem späteren Verfahrensschritt erfolgt. Zudem kann der klebende Körper 4' geschäumt sein oder so ausgebildet sein, dass er in einem späteren Verfahrensschritt geschäumt werden kann. Dies gilt selbstverständlich auch für den klebenden Körper 4 des Formteils 1.

Nach einem geeigneten Verfahren werden der Grundkörper 2' und der klebende Körper 4' im wesentlichen gleichzeitig in einem Werkzeug 6 gemäss Figur 4 hergestellt. Vorzugsweise weist das Verfahren folgende Schritte auf:
a) Spritzgiessen der ersten Komponente (z.B. thermoplastischer Kunststoff
b) Öffnen des Werkzeugs, Kern ziehen, Folien einlegen
c) Spritzgiessen des Haftklebstoff z.B. Haftklebstoffvorstufe.

Dazu weist das Werkzeug 6, das hier lediglich schematisch dargestellt ist, zwei trennbare Werkzeugteile 7 und 8 auf. Zwei Düsen 9 und 10 münden in einen Formhohlraum 13. Dazu wird ein Klebstoff 12 oder ein Klebstoffvorprodukt an die Folie 15 hinterspritzt. Mit der Düse 9 wird zur Bildung des Grundkörpers 2' ein geeigneter Kunststoff 11 in den Formhohlraum 13 eingespritzt. Mit der Düse 10 wird der klebende Körper 4' durch Spritzgiessen hergestellt. Der klebende Körper 4' und der Grundkörper 2' werden somit im wesentlichen gleichzeitig gebildet und die beiden Körper 2' und 4' werden miteinander verbunden. Nach dem Spritzen der beiden Körper 2' und 4' wird entformt. Der klebende Körper 4' kann wie oben erwähnt in einem weiteren Schritt vernetzt werden oder es können seine Klebeeigenschaften zusätzlich verändert werden. Grundsätzlich kann die Folie 14 auch weggelassen werden. Eine solche Folie 14 könnte auch nach dem Spritzgiessen aufgebracht werden.

Das Spritzgiessen des klebenden Formteils kann auch nach einem Umlegen des Grundkörpers von einem ersten in ein zweites Werkzeug erfolgen. Der Grundkörper kann auch im gleichen Werkzeug von einer ersten Kavität in eine zweite Kavität umgelegt werden und dort mit dem klebenden Körper verbunden bzw. dieser angespritzt werden.

Die Erfindung betrifft zudem ein Verfahren, bei dem kein Grundkörper hergestellt wird. Das Teil wird in diesem Fall vollständig durch den klebenden Körper bzw. durch ein Vorprodukt gebildet, wobei Zusatzstoffe, wie beispielsweise ein kostengünstiger Füllstoff, beispielsweise Talk, möglich ist.

Der klebende Teil 4 bzw. 4' kann so ausgeführt sein, dass er ausser der Klebeigenschaft weitere Eigenschaften besitzt. Er kann insbesondere als Farbkörper, als elektrischer Leiter ausgebildet sein oder eine physikalische oder chemische Barrierewirkung besitzen. Er kann zudem aus mehreren Haftklebstoffen bzw. Vorprodukten bzw. Haftklebstoffvorprodukten oder in Kombination mit anderen Werkstoffen hergestellt werden.

Das Formteil wird im Spritzgussverfahren hergestellt, wobei auch hier sehr unterschiedliche und auch sehr komplexe und präzise Formen möglich sind. Es können auch gleichzeitig zwei unterschiedliche Klebstoffe bzw. Vorprodukte mit unterschiedlichen Eigenschaften gespritzt werden.

## Patentansprüche

1. Verfahren zur Herstellung eines verklebbaren Formteils (1, 1'), der einen Grundkörper (2, 2') und einen verklebbaren Körper (4, 4') aufweist und der in einem geschlossenen Formwerkzeug (6) im Spritzgussverfahren hergestellt wird und der eine wenigstens bereichsweise verklebbare Aussenseite (5, 5') aufweist, **dadurch gekennzeichnet, dass** der verklebbare Körper als, klebender Körper (4, 4') mit klebender Aussenseite (5, 5') aus einem Haftklebstoff oder einer Vorstufe eines Haftklebstoffes hergestellt wird, dass der klebende Körper (4, 4') oder das Vorprodukt eines klebenden Körpers hergestellt und gleichzeitig an den Grundkörper (2, 2') angebracht wird, sodass der klebende Körper (4, 4') bzw. das Vorprodukt und der Grundkörper (2, 2') eine Einheit bilden, wobei im Fall des Vorproduktes dieses in einem weiteren Verfahrensschritt in den klebenden Körper (4, 4') umgewandelt wird.

2. Verfahren nach Anspruch 1, **dadurch gekennzeichnet, dass** der klebende Körper (4, 4') bzw. das Vorprodukt des klebenden Körpers mit einem Zusatzstoff versehen ist bzw. wird.

3. Verfahren nach Anspruch 2, **dadurch gekennzeichnet, dass** der Zusatzstoff ein Weichmacher oder Tackifier ist.

4. Verfahren nach einen der Ansprüche 1 bis 3, **dadurch gekennzeichnet, dass** der Zusatzstoff äusseren Einflüssen, z.B. eine mögliche Sauerstoffinhibierung, die Vernetzungsreaktion verhindert oder unterbindet.

5. Verfahren nach Anspruch 2, **dadurch gekennzeichnet, dass** der Zusatzstoff Glaskugeln aufweist.

6. Verfahren nach Anspruch 2, **dadurch gekennzeichnet, dass** der Zusatzstoff ein Metallpulver ist.

7. Verfahren nach einem der Ansprüche 1 bis 6, **dadurch gekennzeichnet, dass** der klebende Körper (4, 4') mit einer lösbaren Folie (14) oder einer Schicht abgedeckt wird.

8. Verfahren nach Anspruch 7, **dadurch gekennzeichnet, dass** die Folie (14) in das Formwerkzeug (6) eingelegt und hinterspritzt wird.

9. Verfahren nach Anspruch 1 bis 8, **dadurch gekennzeichnet, dass** das Vorprodukt durch eine transparente oder teiltransparente Schutzfolie hindurch verändert, beispielsweise vernetzt, wird.

10. Verfahren nach einem der Ansprüche 1 bis 9, **dadurch gekennzeichnet, dass** das Formteil (1, 1') im Mehrkomponentenspritzgussverfahren hergestellt wird.

11. Verfahren nach einem der Ansprüche 1 bis 10, **dadurch gekennzeichnet, dass** der klebende Körper (4, 4') bzw. das Vorprodukt bei seiner Herstellung oder zu einem späteren Zeitpunkt geschäumt wird.

12. Verfahren nach einem der Ansprüche 1 bis 11, **dadurch gekennzeichnet, dass** der klebende Körper (4, 4') nach dem Anbringen an den Grundkörper (2, 2') in einem weiteren Verfahrensschritt vernetzt oder nachvernetzt wird.

13. Verfahren nach einem der Ansprüche 1 bis 12, **dadurch gekennzeichnet, dass** der klebende Körper nach dem Vernetzen plastisch verformbar ist.

14. Formteil, hergestellt nach dem Verfahren gemäss Anspruch 1, **dadurch gekennzeichnet, dass** der klebende Körper (4, 4') bzw. das Vorprodukt gespritzt ist und dass der klebende Körper (4, 4') bzw. das Vorprodukt am Grundkörper (2, 2') angespritzt ist.

15. Formteil nach Anspruch 14, **dadurch gekennzeichnet, dass** der klebende Körper (4, 4') mit einer lösbaren Folie (14) oder Schicht abgedeckt ist.

16. Formteil nach Anspruch 14 oder 15, **dadurch gekennzeichnet, dass** die Viskosität und/oder Klebeeigenschaften des Vorproduktes in einem weiteren Schritt veränderbar sind.

17. Formteil nach einem der Ansprüche 14 bis 16, **dadurch gekennzeichnet, dass** er ein Bauteil ist.

18. Formteil nach Anspruch 17, **dadurch gekennzeichnet, dass** er ein Bauteil für ein Kraftfahrzeug oder ein Gehäuseteil ist.

19. Formteil nach Anspruch 17 oder 18, **dadurch gekennzeichnet, dass** der klebende Körper (4, 4') zur Befestigung vorgesehen ist.

20. Formteil nach einem der Ansprüche 14 bis 19, **dadurch gekennzeichnet, dass** der klebende Körper (4, 4') auch ein Dichtmittel ist.

21. Formteil nach einem der Ansprüche 14 bis 20, **dadurch gekennzeichnet, dass** der klebende Körper (4, 4') funktionalisiert ist, insbesondere als Farbe, elektrische Leitung, physikalische-, chemische Barrierewirkung.

22. Formteil nach einem der Ansprüche 14 bis 21, **dadurch gekennzeichnet, dass** der klebende Körper (4, 4') aus zwei oder mehreren Haftklebstoffen oder Haftklebstoffvorprodukten oder in Kombination mit anderen Werkstoffen hergestellt ist.

## Claims

1. Method for producing a bondable molded part (1, 1') having a base body (2, 2') and an adhesive body (4, 4') and which is produced by an injection molding process within a closed mold (6) and which has an adhesive outside (5, 5') in at least some area, **characterized in that** the adhesive body is produced as an adhesive body (4, 4') with an adhesive outside (5, 5') from a pressure-sensitive adhesive or a precursor of a pressure-sensitive adhesive, that the adhesive body (4, 4') or the precursor of an adhesive body is produced and at the same time is applied to the base body (2, 2') so that the adhesive body (4, 4') and/or the precursor together with the base body (2, 2') form a unit, whereby in the case of the precursor, it is converted to the adhesive body (4, 4') in an additional process step.

2. Method according to Claim 1, **characterized in that** the adhesive body (4, 4') and/or the precursor of the adhesive body is/are provided with an additive.

3. Method as claimed in Claim 2, **characterized in that** the additive is a plasticizer or a tackifier.

4. Method as claimed in any one of Claims 1 through 3, **characterized in that** the additive prevents or suppresses external influences, e.g., a possible oxygen inhibition, the crosslinking reaction.

5. Method as claimed in Claim 2, **characterized in that** the additive comprises glass beads.

6. Method as claimed in Claim 2, **characterized in that** the additive is a metal powder.

7. Method as claimed in any one of Claims 1 through 6, **characterized in that** the adhesive body (4, 4') is covered with a detachable film (14) or layer.

8. Method as claimed in Claim 7, **characterized in that** the film (14) is placed in the mold (6) and backmolded.

9. Method as claimed in any one of Claim 1 to 8, **characterized in that** the precursor is modified, e.g., crosslinked through a transparent or partially transparent protective film.

10. Method as claimed in any one of Claims 1 through 9, **characterized in that** the molded part (1, 1') is produced by a multi-component injection molding process.

11. Method as claimed in any one of Claims 1 through 10, **characterized in that** the adhesive body (4, 4') and/or the precursor is foamed when it is produced or at a later point in time.

12. Method as claimed in any one of Claims 1 through 11, **characterized in that** the adhesive body (4, 4') is crosslinked in an additional process step or in a subsequent crosslinking process after being applied to the base body (2, 2').

13. Method as claimed in any one of Claims 1 through 12, **characterized in that** the adhesive body is plastically deformable after being crosslinked.

14. Molded part, produced according to the method of Claim 1, **characterized in that** the adhesive body (4, 4') and/or the precursor is injected, and that the adhesive body (4, 4') and/or the precursor is integrally molded onto the base body (2, 2').

15. Molded part as claimed in Claim 14, **characterized in that** the adhesive body (4, 4') is covered with a removal film (14) or layer.

16. Molded part as claimed in Claims 14 or 15, **characterized in that** the viscosity and/or adhesive properties of the precursor are modifiable in an additional step.

17. Molded part as claimed in any one of Claims 14 through 16, **characterized in that** it is a component.

18. Molded part as claimed in Claim 17, **characterized in that** it is a part for a motor vehicle or a housing part.

19. Molded part as claimed in Claim 17 or 18, **characterized in that** the adhesive body (4, 4') is provided for fastening.

20. Molded part as claimed in any one of Claims 14 through 19, **characterized in that** the adhesive body (4, 4') is also a sealant.

21. Molded part as claimed in any one of Claims 14 through 20, **characterized in that** the adhesive body (4, 4') is functionalized, in particular as a color, electric line, physical or chemical barrier effect.

22. Molded part as claimed in any one of Claims 14 through 21, **characterized in that** the adhesive body (4, 4') is produced from two or more pressure-sensitive adhesives or pressure-sensitive adhesive precursors or in combination with other materials.

## Revendications

1. Procédé pour la fabrication d'une pièce moulée pouvant être collée (1, 1'), qui présente un corps de base (2, 2') et un corps pouvant être collé (4, 4') et qui est fabriquée dans un outil de moulage fermé (6) dans un procédé de moulage par injection et qui présente une face extérieure (5, 5') pouvant être collée au moins par zone, **caractérisé en ce que** le corps pouvant être collé est fabriqué sous forme de corps adhésif (4, 4') avec une face extérieure collante (5, 5') constituée par un autoadhésif ou un précurseur d'un autoadhésif, **en ce que** le corps adhésif (4, 4') ou le précurseur d'un corps adhésif est produit et simultanément agencé sur le corps de base (2, 2'), de manière telle que le corps adhésif (4, 4') ou le précurseur et le corps de base (2, 2') forment une unité, où, dans le cas du précurseur, celui-ci est transformé dans une autre étape de procédé en corps adhésif (4, 4').

2. Procédé selon la revendication 1, **caractérisé en ce que** le corps adhésif (4, 4') ou le précurseur du corps adhésif présente ou est pourvu d'un additif.

3. Procédé selon la revendication 2, **caractérisé en ce que** l'additif est un plastifiant ou un agent poisseux.

4. Procédé selon l'une quelconque des revendications 1 à 3, **caractérisé en ce que** l'additif prévient ou empêche les influences extérieures, par exemple une éventuelle inhibition de l'oxygène, la réaction de réticulation.

5. Procédé selon la revendication 2, **caractérisé en ce que** l'additif présente des billes de verre.

6. Procédé selon la revendication 2, **caractérisé en ce que** l'additif est une poudre métallique.

7. Procédé selon l'une quelconque des revendications 1 à 6, **caractérisé en ce que** le corps adhésif (4, 4') est revêtu par une feuille (14) amovible ou par une couche.

8. Procédé selon la revendication 7, **caractérisé en ce que** la feuille (14) est placée dans l'outil de moulage (6) et subit un surmoulage par injection.

9. Procédé selon la revendication 1 à 8, **caractérisé en ce que** le précurseur est modifié, par exemple réticulé, au travers d'une feuille de protection transparente ou partiellement transparente.

10. Procédé selon l'une quelconque des revendications 1 à 9, **caractérisé en ce que** la pièce moulée (1, 1') est fabriquée dans un procédé de moulage par injection à plusieurs composants.

11. Procédé selon l'une quelconque des revendications 1 à 10, **caractérisé en ce que** le corps adhésif (4, 4') ou le précurseur est moussé lors de la fabrication ou à un moment ultérieur.

12. Procédé selon l'une quelconque des revendications 1 à 11, **caractérisé en ce que** le corps adhésif (4, 4') est réticulé ou post-réticulé dans une autre étape de procédé, après l'application sur le corps de base (2, 2').

13. Procédé selon l'une quelconque des revendications 1 à 12, **caractérisé en ce que** le corps adhésif est déformable plastiquement après la réticulation.

14. Pièce moulée, fabriquée selon le procédé selon la revendication 1, **caractérisée en ce que** le corps adhésif (4, 4') ou le précurseur est injecté et **en ce que** le corps adhésif (4, 4') ou le précurseur est injecté sur le corps de base (2, 2').

15. Pièce moulée selon la revendication 14, **caractérisée en ce que** le corps adhésif (4, 4') est revêtu par une feuille (14) amovible ou par une couche.

16. Pièce moulée selon la revendication 14 ou 15, **caractérisée en ce que** la viscosité et/ou les propriétés adhésives du précurseur sont modifiables dans une autre étape.

17. Pièce moulée selon l'une quelconque des revendications 14 à 16, **caractérisée en ce qu'**il s'agit d'un élément de construction.

18. Pièce moulée selon la revendication 17, **caractérisée en ce qu'**il s'agit d'un élément de construction pour un véhicule ou une pièce d'un châssis.

19. Pièce moulée selon la revendication 17 ou 18, **caractérisée en ce que** le corps adhésif (4, 4') est prévu pour la fixation.

20. Pièce moulée selon l'une quelconque des revendications 14 à 19, **caractérisée en ce que** le corps adhésif (4, 4') est également un moyen d'étanchéité.

21. Pièce moulée selon l'une quelconque des revendications 14 à 20, **caractérisée en ce que** le corps adhésif (4, 4') est fonctionnalisé, en particulier comme corps coloré, câble électrique, avec un effet de barrière physique, chimique.

22. Pièce moulée selon l'une quelconque des revendications 14 à 21, **caractérisée en ce que** le corps adhésif (4, 4') est produit à partir de deux autoadhésifs ou précurseurs d'autoadhésifs ou plus ou en combinaison avec d'autres matériaux.
